# EUROPÄISCHE PATENTANMELDUNG

(11) **EP 2 653 343 A2**
(43) Veröffentlichungstag der Anmeldung: **23.10.2013**
(21) Anmeldenummer: 13156382.7
(22) Anmeldetag: 22.02.2013
(51) Int. Cl.: B60N 2/42, B60N 2/427

(54) **Verfahren und Vorrichtung zum Schutz eines Fahrzeuginsassen bei einem Aufprall eines Objektes auf ein Fahrzeug**

(30) Priorität: 19.04.2012 DE 102012206426
(71) Anmelder: ROBERT BOSCH GMBH, 70442 Stuttgart (DE)
(72) Erfinder: Freienstein, Heiko, 71263 Weil Der Stadt (DE); Koehler, Armin, 74343 Sachsenheim (DE); Schrader, Jens, 76530 Baden-Baden (DE); Peter, Gilles, 67360 Morsbronn Les Bains (FR)

(57) **Zusammenfassung**

Die vorliegende Erfindung betrifft ein Verfahren (1000) zum Schutz eines Fahrzeuginsassen (770) bei einem Aufprall eines Objektes (780) auf ein Fahrzeug (705), wobei ein Schutzelement (110, 760) eines Personenschutzsystems (710) verwendet wird, welches in einem vorbestimmten Zustand vor und/oder während des Aufpralls des Objektes (780) auf das Fahrzeug (705) eine Kraft auf den Fahrzeuginsassen (770) ausübt. Das Verfahren umfasst einen Schritt des Einlesens (1010) eines Aufprallsignals (786), das eine Schwere oder Intensität des Aufpralls des Objekts (780) auf das Fahrzeug (705) repräsentiert. Ferner umfasst das Verfahren einen Schritt des Lösens (1020) eines Kraftschlusses zwischen dem Schutzelement (110, 760) und dem Fahrzeuginsassen (770), wenn zumindest ein Wert des Aufprallsignals (786) in einer vorbestimmten Beziehung zu einem Schwellwert steht.

## Beschreibung

### Stand der Technik

Die vorliegende Erfindung bezieht sich auf ein Verfahren zum Schutz eines Fahrzeuginsassen bei einem Aufprall eines Objektes auf ein Fahrzeug, auf eine entsprechende Vorrichtung sowie auf ein entsprechendes Computerprogramm.

### Stand der Technik

Ein Sitz für einen Insassen in einem Kraftfahrzeug umfasst verstellbare Stützelemente, um den Insassen gegenüber dem Sitz abzustützen. Die Stützelemente können durch den Insassen verstellbar sein und darüber hinaus in Abhängigkeit eines Signals, das auf einen bevorstehenden Aufprall des Kraftfahrzeugs auf ein Hindernis hinweist, auch automatisch verstellbar sein. Üblicherweise wird die Einstellung des Halteelements dem Insassen überlassen, sodass dieser in Abhängigkeit von persönlichen Präferenzen, einer Fahrweise und Straßenverhältnissen bestimmen kann, wie stark er beispielsweise seitlich im Bereich des Brustkorbs oder im Bereich der Oberschenkel durch den Sitz gestützt werden möchte. Steht ein Aufprall des Kraftfahrzeugs bevor, so können die vorhandenen Stützelemente in eine Position verfahren werden, in der eine maximale Stützwirkung des Insassen erzielt wird.

EP 1 726 475 A1 zeigt eine Vorrichtung zur motorischen Ansteuerung einer Seitenwanne eines Sitzes eines Kraftfahrzeugs in Abhängigkeit eines Signals, das eine Unfallgefährdung des Kraftfahrzeugs anzeigt.

Bekannt ist ferner beispielsweise aus der DE 10 2009 001 426 A1 ein reversibles Seitenhaltsystem, welches in der Pre-Crash Phase aktiviert wird und in der Crash-Phase im Seitencrash die kinetische Energie zum Teil absorbiert. Das in der Druckschrift DE 10 2009 001 426 A1 offenbarte System kann aufgrund seiner Reversibilität und seiner sanften Anschmiegebewegung an den Insassen (vergleichsweise langsame Stellzeit, kleine Kräfte, Polster) Teil eines System werden, dass auch mit eine gewisse "False positive Rate" toleriert. Die Konsequenzen einer Fehlauslösung sind tolerierbar.

Ferner kann auch eine pneumatische Sitz-Seitenwange verwendet werden, welche den Insassen unmittelbar vor dem Seitencrash aus der Intrusionszone herausbeschleunigt. Dies sorgt für freien Deformationsraum und senkt die relative Aufprallgeschwindigkeit des Insassen auf die Tür- und Fahrzeugstruktur. Ein solches System übt in kurzer Zeit eine hohe Kraft auf den Insassen aus. Eine Fehlauslösung hätte gravierendere Folgen als beim zuvor vorgestellten System aus der DE 10 2009 001 426 A1. Eine pneumatische Seitenwange hat allerdings einen höheren Wirkungsgrad.

### Offenbarung der Erfindung

Vor diesem Hintergrund wird mit der vorliegenden Erfindung ein Verfahren zum Schutz eines Fahrzeuginsassen bei einem Aufprall eines Objektes auf ein Fahrzeug, weiterhin eine Vorrichtung, die dieses Verfahren verwendet sowie schließlich ein entsprechendes Computerprogramm gemäß den Hauptansprüchen vorgestellt. Vorteilhafte Ausgestaltungen ergeben sich aus den jeweiligen Unteransprüchen und der nachfolgenden Beschreibung.

Die vorliegende Erfindung schafft ein Verfahren zum Schutz eines Fahrzeuginsassen bei einem Aufprall eines Objektes auf ein Fahrzeug, wobei ein Schutzelement eines Personenschutzsystems verwendet wird, welches in einem vorbestimmten Zustand vor und/oder während des Aufpralls des Objektes auf das Fahrzeug eine Kraft auf den Fahrzeuginsassen ausübt, wobei das Verfahren die folgenden Schritte aufweist:
- Einlesen eines Aufprallsignals, das eine Schwere oder Intensität des Aufpralls des Objekts auf das Fahrzeug repräsentiert; und
- Lösen eines Kraftschlusses zwischen dem Schutzelement und dem Fahrzeuginsassen, wenn zumindest ein Wert des Aufprallsignals in einer vorbestimmten Beziehung zu einem Schwellwert steht.

Ferner schafft die vorliegende Erfindung eine Vorrichtung zum Schutz eines Fahrzeuginsassen bei einem Aufprall eines Objektes auf ein Fahrzeug, wobei ein Schutzelement eines Personenschutzsystems verwendet wird, welches in einem vorbestimmten Zustand vor und/oder während des Aufpralls des Objektes auf das Fahrzeug eine Kraft auf den Fahrzeuginsassen ausübt, wobei die Vorrichtung die folgenden Merkmale aufweist:
- eine Schnittstelle zum Einlesen eines Aufprallsignals, das eine Schwere oder Intensität des Aufpralls des Objekts auf das Fahrzeug repräsentiert; und
- eine Einheit zum Lösen eines Kraftschlusses zwischen dem Schutzelement und dem Fahrzeuginsassen, wenn zumindest ein Wert des Aufprallsignals in einer vorbestimmten Beziehung zu einem Schwellwert steht.

Die vorliegende Erfindung schafft somit eine Vorrichtung oder ein Steuergerät, das ausgebildet ist, um die Schritte des erfindungsgemäßen Verfahrens in entsprechenden Einrichtungen durchzuführen bzw. umzusetzen. Auch durch diese Ausführungsvariante der Erfindung in Form eines Steuergeräts kann die der Erfindung zugrunde liegende Aufgabe schnell und effizient gelöst werden.

Unter einem Steuergerät kann vorliegend ein elektrisches Gerät verstanden werden, das Sensorsignale verarbeitet und in Abhängigkeit davon Steuer- und/oder Datensignale ausgibt. Das Steuergerät kann eine Schnittstelle aufweisen, die hard- und/oder softwaremäßig ausgebildet sein kann. Bei einer hardwaremäßigen Ausbildung können die Schnittstellen beispielsweise Teil eines sogenannten System-ASICs sein, der verschiedenste Funktionen des Steuergeräts beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind.

Von Vorteil ist auch ein Computerprogramm mit Programmcode, der auf einem maschinenlesbaren Träger wie einem Halbleiterspeicher, einem Festplattenspeicher oder einem optischen Speicher gespeichert sein kann und zur Durchführung des Verfahrens nach einer der vorstehend beschriebenen Ausführungsformen verwendet wird, wenn das Programm auf einem Computer, einem Steuergerät oder einer Vorrichtung ausgeführt wird.

Unter einem Objekt kann beispielsweise ein Baum, eine Mauer, ein Fahrzeug oder eine ähnlich großer Gegenstand betrachtet werden, der auf das Fahrzeug aufschlägt oder auf den das Fahrzeug aufschlägt, wodurch eine Gefährdung zumindest eines Insassen des Fahrzeugs verursacht wird. Unter einem Personenschutzsystem kann beispielsweise ein Airbag-System, ein Gurtstraffer-System oder ein System zum Fixieren des Fahrzeuginsassen in einem Sitz verstanden werden. Unter einem Schutzelement kann beispielsweise ein Frontairbag oder eine Seitenwange des Satzes verstanden werden. Unter einem Aufprallsignal kann beispielsweise ein Signal einer Unfallsensorik wie einem Druck-, Beschleunigungs-, Körperschall-, Radar- und/oder Lidar-Sensor verstanden werden, der einen bereits erfolgten Aufprall des Objekts auf das Fahrzeug oder einen unmittelbar bevorstehenden Aufprall des Objekts auf das Fahrzeug erkennen kann. Alternativ oder zusätzlich kann unter einem Aufprallsignal auch ein Kraftstoß verstanden werden, der durch den Aufprall des Objektes auf das Fahrzeug verursacht wird und der beispielsweise eine mechanische Lösung des Kraftschlusses zwischen dem Schutzelement und dem Insassen bewirkt, beispielsweise durch einen Bruch eines Elementes an einer Sollbruchstelle. Unter einem Kraftschluss kann ein Zustand verstanden werden, in dem das Schutzelement eine Kraft auf einen Körperteil des Fahrzeuginsassen ausübt. Unter einem Lösen des Kraftbeschlusses kann ein Vorgang verstanden werden, bei dem das Ausüben der Kraft auf den Körperteil des Fahrzeuginsassen unterbrochen, abgebrochen oder anderweitig beendet wird. Und einem Schwellwert kann beispielsweise eine Schranke verstanden werden, die unter Laborbedingungen ermittelt wurde und in einem Speicher in dem Personenschutzsystem beziehungsweise dem Fahrzeug abgelegt ist. Auch kann der Schwellwert als veränderbarer Wert verstanden werden, der je nach Einsatzbedingung angepasst wird. Alternativ oder zusätzlich kann auch der Schwellwert durch eine maximale Bruchkraft bedingt sein, die aufzuwenden ist, um beispielsweise das Schutzelement an der Sollbruchstelle zu brechen, um den Kraftschluss zwischen dem Insassen und dem Schutzelement zu lösen. Unter einer vorbestimmten Beziehung des Wertes des Aufprallsignals zu einem Schwellwert kann beispielsweise verstanden werden, dass der Wert des Aufprallsignals einen Wert aufweist, der größer oder zumindest gleich dem Schwellwert ist.

Die vorliegende Erfindung basiert auf der Erkenntnis, dass es in einigen Unfallszenarien für den Insassenschutz günstiger ist, wenn ein bereits aktiviertes Schutzsystem wieder deaktiviert wird, um beispielsweise eine Verletzungsschwere für einen Fahrzeuginsassen möglichst gering zu halten. Insbesondere kann hierdurch eine bessere Abstimmung der Wirkung von einzelnen Komponenten aus einer Mehrzahl von verfügbaren Komponenten eines Personenschutzsystems in einem Fahrzeug erreicht werden. Jede einzelne Komponente, wie beispielsweise ein Airbag, eine aktivierbare Sitzseitenwange oder ein Gurtstraffer entfaltet für sich alleine bereits eine hohe Schutzwirkung. Jedoch könnte bei ungenügender Abstimmung der Wirkung der einzelnen Komponenten bei einem Unfall oder bei einem Aufprall eines Objektes auf das Fahrzeug durch die Wirkung einer Kombination der einzelnen Komponenten ein Fahrzeuginsasse schwerer verletzt werden, als wenn eines oder mehrere der verfügbaren Schutzelemente wieder deaktiviert werden. Insbesondere wenn von einem Schutzelement keine Kraft mehr auf dem Fahrzeuginsassen ausgeübt wird, kann eine solche Verbesserung der Fahrzeugsicherheit erreicht werden.

Die vorliegende Erfindung bietet somit den Vorteil, dass eine Wahrscheinlichkeit erhöht wird, dass auch eine zunehmende Anzahl von Personenschutzsystemelementen in einem Fahrzeug auch tatsächlich zu einer Erhöhung des Fahrzeuginsassenschutzes führt und nicht zu einer gegenseitigen Störung der Schutzwirkung, sodass letztendlich ein Fahrzeuginsasse bei einem Aufprall eines Objektes auf das Fahrzeug mehr gefährdet würde, als wenn eine oder mehrere Schutzelemente nicht vorhanden wären.

Besonders vorteilhaft ist es, wenn im Schritt des Lösens ein Schwellwert verwendet wird, der von einer Größe, einem Gewicht und/oder eines Maßes des Körpers des Fahrzeuginsassen abhängig ist. Die Verwendung eines derartigen Schwellwerts bietet den Vorteil, dass nun eine Schutzwirkung eines Personenschutzsystems individuell auf einen bestimmten Fahrzeuginsassen abgestimmt werden kann.

Günstig ist es ferner, wenn vor dem Schritt des Lösens ein Schritt des Wegbewegens des Insassen von einem ermittelten und/oder geschätzten Aufprallort des Objektes auf das Fahrzeug vorgesehen ist. Eine derartige Ausführungsform der vorliegenden Erfindung bietet den Vorteil, dass bereits begonnen wurde, den Fahrzeuginsassen aus einem Gefährdungsbereich zu verbringen, sodass eine wichtige Schutzfunktion bereits eingeleitet wurde.

Besonders vorteilhaft ist es, wenn im Schritt des Lösens ein Aktivieren eines elektrischen, elektromotorischen, mechanischen, pneumatischen und/oder pyrotechnischen Aktors vorgesehen ist, um einen Kraftschluss zwischen dem Schutzelement und dem Fahrzeuginsassen zu unterbrechen. Eine derartige Ausführungsform der vorliegenden Erfindung bietet den Vorteil eines technisch sehr leicht zu implementierenden Aktors, sodass eine solche Ausführungsform der vorliegenden Erfindung technisch kostengünstig umgesetzt werden kann.

Gemäß einer weiteren Ausführungsform der vorliegenden Erfindung kann der Schritt des Lösens in Abhängigkeit davon ausgeführt werden, dass vor, während und/oder nach dem Schritt des Lösens ein Schritt des Aktivierens eines weiteren Schutzelementes des Personenschutzsystems vorgesehen ist. Eine derartige Ausführungsform der vorliegenden Erfindung bietet den Vorteil, dass eine Schutzwirkung von mehreren Schutzelementen des Personenschutzsystems optimiert werden kann, in dem ein einzelnes oder mehrere Schutzelemente des Personenschutzsystems gezielt abgeschaltet werden, während andere aktiviert werden oder bleiben.

Gemäß einer anderen Ausführungsform der vorliegenden Erfindung kann im Schritt des Lösens ein Schwellwert verwendet werden, der von einem Aufprallort des Objektes auf das Fahrzeug und/oder einer kinetischen Energie des erfolgten und/oder erwarteten Aufpralls des Objektes auf das Fahrzeug abhängig ist. Eine derartige Ausführungsform der vorliegenden Erfindung bietet den Vorteil, dass sehr flexibel auf den aktuell gerade erfolgenden bzw. in Kürze erfolgenden Aufprall des Objekts auf das Fahrzeug durch das Personenschutzsystem reagiert werden kann. Auf diese Weise lässt sich die Schutzwirkung der Schutzelemente des Personenschutzsystems weiter optimieren.

Besonders vorteilhaft hat es sich erwiesen, wenn im Schritt des Lösens ein Kraftschluss von einer Seitenwange des Insassensitzes als Schutzelement auf den Körper, insbesondere den Thorax und/oder das Becken und/oder ein Bein des Fahrzeuginsassen gelöst wird. Eine derartige Ausführungsform der vorliegenden Erfindung bietet den Vorteil, dass die Wirkung eines sehr kräftigen Schutzelementes abgemeldet werden kann, wenn diese Wirkung im aktuellen Unfallszenario nicht benötigt wird. Auf diese Weise lässt sich eine deutliche Reaktion der Verletzungsgefahr für den Fahrzeuginsassen erreichen.

Die Erfindung wird nun mit Bezug auf die beigefügten Figuren genauer beschrieben. Es zeigt:
- Fig. 1: einen Sitz mit einer verstellbaren Insassenstütze in einem Kraftfahrzeug;
- Fig. 2: eine erste Verstelleinrichtung für die Insassenstütze aus Fig. 1;
- Fig. 3: eine zweite Verstelleinrichtung für die Insassenstütze aus Fig. 1;
- Fig. 4: eine dritte Verstelleinrichtung für die Insassenstütze aus Fig. 1;
- Fig. 5: eine vierte Verstelleinrichtung für die Insassenstütze aus Fig. 1,
- Fig. 6: eine weitere Ansicht der Verstelleinrichtung aus Fig. 5;
- Fig. 7: ein Blockschaltbild eines Fahrzeugs, in dem ein Ausführungsbeispiel der vorliegenden Erfindung als Steuergerät implementiert ist;
- Fig. 8: eine Verstelleinrichtung für die Insassenstütze gemäß Fig. 4, die für ein Ausführungsbeispiel der vorliegenden Erfindung verwendbar ist;
- Fig. 9A-B: eine Verstelleinrichtung für die Insassenstütze gemäß Fig. 5, die für ein Ausführungsbeispiel der vorliegenden Erfindung verwendbar ist; und
- Fig. 10: ein Ablaufdiagramm eines Ausführungsbeispiels der vorliegenden Erfindung als Verfahren.

In der nachfolgenden Beschreibung bevorzugter Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

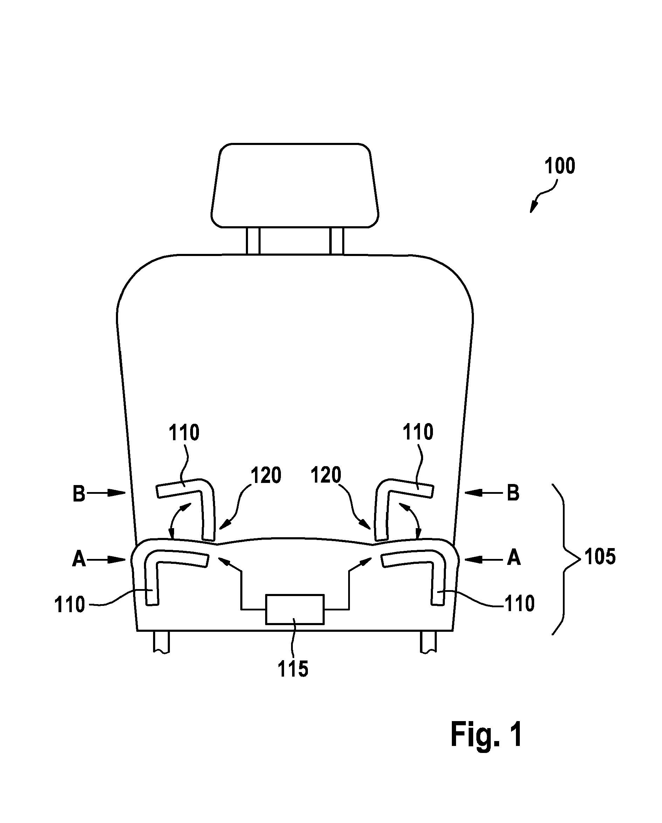

Fig.1 zeigt einen Sitz 100 in einem Kraftfahrzeug. Der Sitz 100 umfasst eine Insassenstütze 105, die ohne Beschränkung der Allgemeinheit in einem Bereich des Sitzes 100 angeordnet ist, in dem Becken und Oberschenkel eines Insassen des Sitzes 100 zu liegen kommen. In alternativen Ausführungsformen kann die Insassenstütze 105 auch eine seitliche Oberkörperstütze oder eine andere Stütze des Insassen des Sitzes 100 betreffen. Die Insassenstütze 105 muss auch nicht wie dargestellt symmetrisch aufgebaut sein.

Die in Fig. 1 dargestellte Insassenstütze 105 umfasst zwei Stützelemente 110, die jeweils in einer unteren Verstellposition A und einer oberen Verstellposition B dargestellt sind, eine zentrale Antriebseinrichtung 115 und zwei Verstelleinrichtungen 120, welche jeweils eine Bewegung der Antriebseinrichtung 115 auf die zugeordnete Insassenstütze 105 vermitteln.

Die Verstelleinrichtungen 120 sind lediglich schematisch dargestellt. Jede Verstelleinrichtung 120 ist dazu eingerichtet, das ihr zugeordnete Stützelement 110 wenigstens zwischen der unteren Verstellposition A und der oberen Verstellposition B zu bewegen, wobei die Bewegung als Kombination zweier Drehbewegungen erfolgt. In der Darstellung von Fig. 1 schwenkt eine erste Drehbewegung um eine Drehachse, die außerhalb des Stützelements 110 liegt, das Stützelement 110 nach oben, und eine zweite Drehbewegung mit einer Drehachse, die innerhalb des Stützelements 110 liegt, verkippt das Stützelement 110 zur Mitte des Sitzes 100 hin. Im Folgenden werden unterschiedliche Ausführungsformen für Verstelleinrichtungen 120 dargestellt, um die beschriebene Kombination zweier Drehbewegungen bereitzustellen.

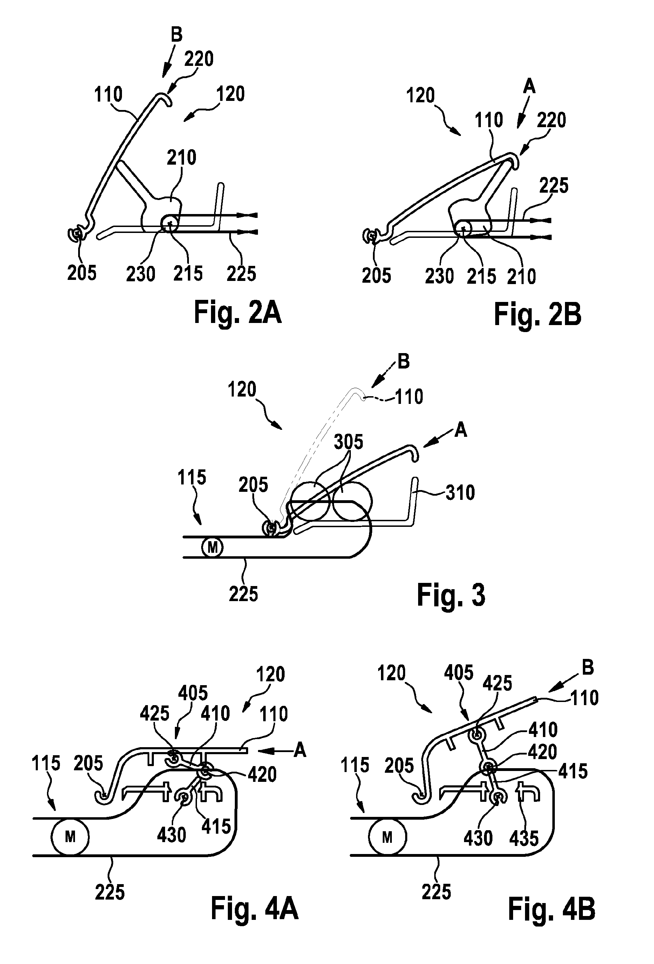

Fig. 2 zeigt eine erste Verstelleinrichtung 120 für die Insassenstütze 105 aus Figur 1. In Fig. 2A ist das Stützelement 110 der Insassenstütze 105 in einem ausgefahrenen Zustand, der zur unteren Verstellposition A korrespondiert, in Fig. 2B in einem eingefahrenen Zustand, der zur oberen Verstellposition B korrespondiert, abgebildet. Die folgenden Erläuterungen beziehen sich auf beide Figuren 2A und 2B.

Das Stützelement 110 ist um eine erste Drehachse 205 drehbar gelagert. Ein Ausrückhebel 210 ist um eine zweite Drehachse 215 drehbar gelagert. Die beiden Drehachsen 205 und 210 befinden sich in einem vorbestimmten Abstand und sind gegenüber dem Sitz 100 aus Fig. 1 fixiert. Ein von der zweiten Drehachse 215 entferntes Ende des Ausrückhebels 210 befindet sich im Eingriff mit dem Stützelement 110. Je nach Drehstellung des Ausrückhebels 210 betätigt der Ausrückhebel 210 das Stützelement 110 derart, dass es mehr oder weniger weit von den Drehachsen 205 und 215 nach oben geklappt ist.

Bildet ein Kontaktpunkt des oberen Endes des Ausrückhebels 210 mit den Drehachsen 205 und 215 einen rechten Winkel, so werden nach rechts oder nach unten wirkende Belastungen des Stützelements 110 beinahe vollständig an die Drehachsen 205 und 215 abgegeben und der Ausrückhebel 210 wird dadurch in seinem Drehwinkel nicht beeinflusst. An einem von der ersten Drehachse 205 entfernten Ende umfasst das Stützelement 110 einen gebogenen Abschnitt, in dem das obere Ende des Ausrückhebels 210 zu liegen kommt, wenn der Drehwinkel des Ausrückhebels 210 entsprechend ist. Dieser Zustand ist in Fig. 2B dargestellt. Durch das Einrasten des oberen Endes des Ausrückhebels 210 am gebogenen Abschnitt 220 des Stützelements 110 bewirken nach unten oder nach rechts gerichtete Kräfte auf das Stützelement 110 auch in dieser Position kein Verdrehen des Ausrückhebels 210.

Die Winkelstellung des Ausrückhebels 210 wird gesteuert, indem ein Seilzug 225 reibschlüssig um eine Rolle 230 geführt ist, die drehmomentschlüssig mit der zweiten Drehachse 215 mit dem Ausrückhebel 210 verbunden ist. Der Seilzug 225 kann einseitig oder zweiseitig ausgeführt sein und beispielsweise einen Bowdenzug umfassen. Die Betätigung des Seilzugs 225 erfolgt translatorisch durch die Antriebseinrichtung 115 aus Fig. 1.

Fig. 3 zeigt eine zweite Verstelleinrichtung 120 für die Insassenstütze 105 aus Fig. 1. Anstelle des Ausrückhebels 210 der oben mit Bezug auf Fig. 2 dargestellten Ausführungsform wird hier eine horizontal verschiebbare Walze 305 verwendet, um das Stützelement 110 unterschiedlich weit nach oben zu klappen. Die Walze 305 ist in einer linken und einer rechten Position dargestellt; dazu korrespondierend ist das Stützelement 110 in einer oberen Verstellposition B bzw. einer unteren Verstellposition A dargestellt. Die Walze 305 wird mittels des Seilzugs 225 nach links bzw. rechts verschoben. Die Position des Stützelements 110 ist durch einen Berührungspunkt mit der Walze 305 und einem Berührungspunkt der Walze 305 mit einem horizontalen Führungselement 310 definiert, welches am Sitz 100 aus Fig. 1 fixiert ist.

Fig. 4 zeigt eine dritte Verstelleinrichtung 120 für die Insassenstütze 105 aus Fig. 1. Die Verstellung des Stützelements 110 erfolgt hier mithilfe eines Kniehebelgelenks 405. Fig. 4A zeigt das Stützelement 110 in der unteren Verstellposition A, Fig. 4B in der oberen Verstellposition B. Die folgenden Ausführungen betreffen beide Darstellungen von Figuren 4A und 4B.

In bekannter Weise umfasst das Kniehebelgelenk 405 eine erste Stütze 410 und eine zweite Stütze 415, die mittels einer dritten Drehachse 420 drehbar miteinander verbunden sind. Die erste Stütze 410 ist darüber hinaus mittels einer vierten Drehachse 425 mit dem Stützelement 110 und die zweite Stütze 415 mittels einer fünften Drehachse 430 drehbar mit einer Halterung 435 verbunden. Die Halterung 435 ist am Sitz 100 aus Fig. 1 fixiert.

Die translatorische Bewegung des Seilzugs 225 wird auf die dritte Drehachse 420 übertragen. Das Kniehebelgelenk 405 kann derart ausgelegt sein, dass nach rechts bzw. nach unten wirkende Kräfte auf das Stützelement 110 vollständig vom Kniehebelgelenk 405 aufgenommen werden, so dass eine selbstsperrende Verstelleinrichtung 120 realisiert sein kann, in der diese Kräfte nicht über den Seilzug 225 an die Antriebseinrichtung 115 vermittelt werden.

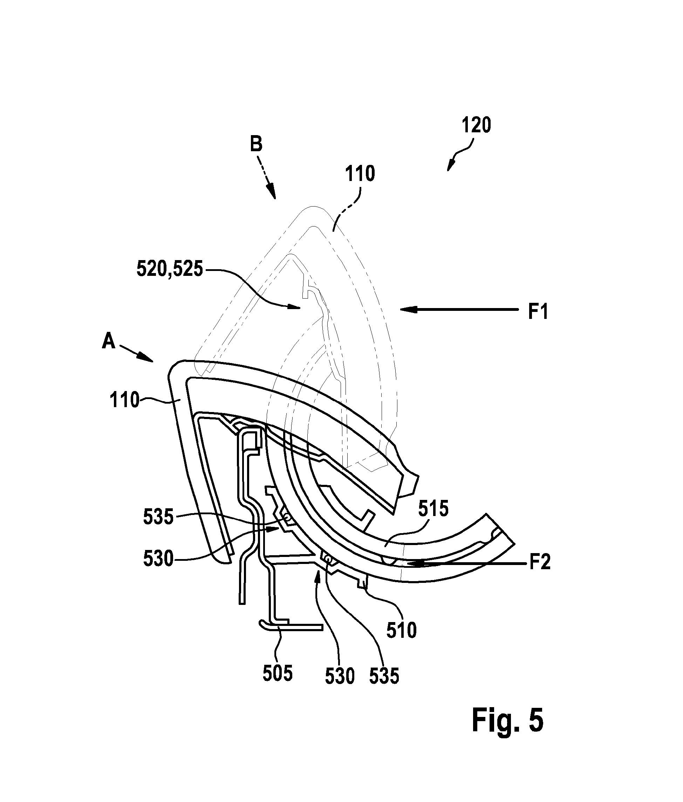

Fig. 5 zeigt eine vierte Verstelleinrichtung 120 für die Insassenstütze 105 aus Fig. 1. In einer Überlagerung ist das Stützelement 110 in der unteren Verstellposition A und in der oberen Verstellposition B dargestellt.

Ein Träger 505 ist am Sitz 100 aus Fig. 1 fixiert. Bevorzugterweise umfasst der Träger 505 ein profiliertes Blech zur Erhöhung der Stabilität. Am Träger 505 ist eine Aufnahme 510 angebracht, in der ein kreisbogenförmiger Abschnitt einer Schiene 515 entlang des Kreisbogens verschiebbar gelagert ist. Ein oberes Ende der Schiene 515 ist mit dem Stützelement 110 verbunden. Dazu ist an der Schiene 515 ein erstes Verbindungselement 520 und am Stützelement 110 ein zweites Verbindungselement 525 angebracht. Die beiden Verbindungselemente 520, 525 korrespondieren zueinander und stellen einen Kraftschluss zwischen dem Stützelement 110 und der Schiene 115 her.

In der Aufnahme 510 sind auf einer Außenseite der Schiene 515 zwei Vertiefungen 530 ausgeformt, in denen jeweils ein Gleitelement 535 angeordnet ist. Die Gleitelemente 535 tragen zu einer reibungsarmen Bewegung der Schiene 515 in der Aufnahme 510 bei.

Im oberen Bereich von Fig. 5 ist eine auf das obere Ende des Stützelements 110 nach links wirkende Kraft F1 dargestellt und in einem unteren Bereich ist eine auf das untere Ende der Schiene 515 nach links wirkende Kraft F2 dargestellt. F2 entspricht einer Verstellkraft, welche das Stützelement 110 von der unteren Verstellposition A in die obere Verstellposition B verbringt. F1 entspricht einer Kraft, die ein Insasse des Sitzes 100 aus Fig. 1 im Fall eines seitlichen Aufpralls des Sitzes 100 aus Fig. 1 auf ein Hindernis auf das Stützelement 110 ausübt. Die in der Aufnahme 510 verschiebbar gelagerte Schiene 515 lenkt die beiden Kräfte F1 und F2 im Wesentlichen so um, sodass sie gegeneinander wirken. Dabei hängt ein Grad der Umlenkung der Kräfte F1 und F2 umgekehrt von einem Reibungskoeffizienten der Schiene 515 zur Aufnahme 510 ab. Ist die Reibung gering, so erfolgt die Umlenkung der Kräfte F1, F2 verlustarm, ist die Reibung jedoch hoch, so wird ein Teil der umgelenkten Kräfte F1, F2 in einem Eingriffsbereich zwischen der Schiene 515 und der Aufnahme 510 in Wärme umgesetzt.

Die in den Vertiefungen 530 teilweise aufgenommenen Gleitelemente 535 bestehen aus einem reibungsarmen und elastisch verformbaren Material, beispielsweise einem entsprechenden Kunststoff. Durch die beiden nach links wirkenden Kräfte F1 und F2 wird die Schiene 515 nach links gegen die Gleitelemente 535 gepresst, sodass diese komprimiert werden. Übersteigen die nach links wirkenden Kräfte ein vorbestimmtes Maß, so werden die Gleitelemente 535 so weit zusammengepresst, dass die Schiene 515 in einem Außenbereich in Reibschluss mit der Aufnahme 510 gelangt. Ab dieser vorbestimmten Kraft steigt ein Anteil der Kräfte F1, F2, die nicht ineinander umgewandelt werden, sondern durch Reibkräfte an der Aufnahme 510 in Wärme umgesetzt werden, weiter an.

Steigt die Kraft F1 beispielsweise in Form eines seitlichen Aufpralls des Kraftfahrzeugs, in dem der Sitz 100 angebracht ist, sprunghaft an, so wird das Stützelement 110 nach links gedrückt und die Schiene 515 gleitet entgegen dem Uhrzeigersinn durch die Aufnahme 510. Die durch die Antriebseinrichtung 115 in Fig. 1 aufgebracht Kraft F2 bewirkt dabei ein Auswandern der Schiene 515 nach links, sodass die Gleitelemente 535 komprimiert werden und ein Teil der Kraft F1 im Reibschluss der Schiene 515 mit der Aufnahme 510 in Wärme umgesetzt wird, während ein anderer Teil an die Antriebseinrichtung 115 weitergegeben wird. Die Antriebseinrichtung 115 umfasst vorzugsweise eine Rutschkupplung, sodass die Kraft F2 ein vorbestimmtes Maß nicht übersteigt.

Auf die skizzierte Weise kann zum Abbremsen eines Insassen des Sitzes 100 in Fig. 1 eine definierte Stützkraft durch das Stützelement 110 auf den Insassen ausgeübt werden, wobei die Stützkraft begrenzt ist, sodass der Insasse vor Verletzungen durch das Stützelement 110 geschützt ist. Dabei wird das Stützelement 110 von der oberen Verstellposition B, in der eine maximale Haltekraft an den Insassen vermittelbar ist, in die untere Verstellposition A gedrückt. Dieser Verstellvorgang erfolgt unabhängig von einer Ansteuerung bzw. einem Antrieb der Verstelleinrichtung 120 durch die Antriebseinrichtung 115. Beim Herunterklappen des Stützelements 110 von der oberen Verstellposition B in die untere Verstellposition A wird ein Impuls des Insassen in kontrollierter Weise abgebaut, sodass weder der Insasse, noch die Verstelleinrichtung 120 Schaden nehmen.

Die Betätigung der Verstelleinrichtung 120 erfolgt bevorzugt mittels eines Bowdenzugs oder eines Seilzugs 225 translatorisch am unteren Ende der Schiene 515.

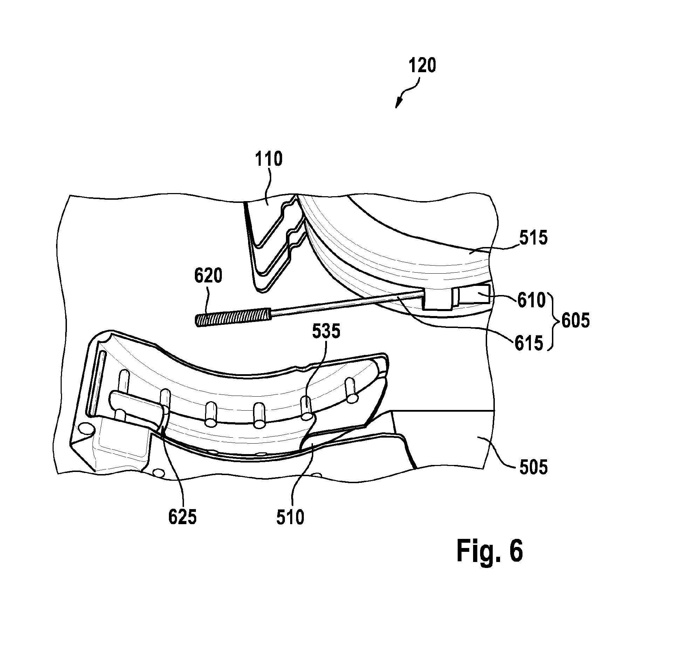

Fig. 6 zeigt eine weitere Ansicht der Verstelleinrichtung 120 aus Fig. 5. Die Darstellung ist perspektivisch, wobei die Schiene 515 zu Darstellungszwecken aus der Aufnahme 510 herausgelöst und verdreht ist. Die translatorische Übermittlung der Verstellkraft von der Antriebseinrichtung 115 von Fig. 1 auf die Schiene 515 erfolgt mittels eines Bowdenzugs 605. Der Bowdenzug 605 umfasst eine Hülle 610, die in axialer Richtung an der Schiene 515 abgestützt ist, und eine Seele 615, die aus dem axialen Ende der Hülle 610 austritt und in einem Schraubgewinde 620 endet. An der Aufnahme 510 ist eine Durchführung 625 ausgebildet, durch die das Schraubgewinde 620 der Seele 615 durchgeführt und mit einer Mutter gesichert werden kann. Wird dann die Schiene 515 in die Aufnahme 510 eingesetzt und die Seele 615 durch die Hülle 610 nach rechts zurückgezogen, so wird die Schiene 515 im Uhrzeigersinn durch die Aufnahme 510 geschoben, sodass das Stützelement 110 von einer unteren in eine obere Position gelangt.

In einer alternativen Ausführungsform kann der Bowdenzug 605 in bekannter Weise auch so verlegt werden, dass die Hülle 610 an der Aufnahme 510 und die Seele 615 an der Schiene 515 abgestützt ist.

Dieses vorstehend näher beschriebene Personenschutzsystem kann nun als Basis zur Implementierung der vorliegenden Erfindung verwendet werden. Zur Erläuterung des Hintergrundes der vorliegenden Erfindung seien jedoch beispielhaft drei Zeitabschnitte unterschieden:
Phase 1: frühe Pre-Crash-Phase: ein Crash (d. h. Unfall oder Aufprall eines Objektes auf das Fahrzeug) ist wahrscheinlich.
Phase 2: späte Pre-Crash-Phase: ein Crash ist unvermeidbar.
Phase 3: In-Crash-Phase: ein Crash hat begonnen.

### Phase 1: frühe Pre-Crash-Phase

Das in der nachfolgenden Beschreibung beispielhaft verwendete System wirkt ähnlich wie der in der DE 10 2009 001 426 A1 vorgestellte Ansatz. In einem solchen System legt sich die Seitenwange in einer frühen Pre-Crash-Phase an. Das System ist voll reversibel und gefährdet den Insassen nicht. Eine Auslösung erfolgt beispielsweise aufgrund von Signalen einer Inertialsensorik (Fahrzeug schleudert) oder einer vorausschauenden Sensorik welche eine akute Seitencrashwahrscheinlichkeit detektiert. Falls keine weitere Stufe des Systems ausgelöst wird, besteht jetzt schon ein Schutz in einem folgenden Seitencrash.

### Phase 2: späte Pre-Crash-Phase

In Phase 1 wurde gemäß dem vorstehend genannten Ansatz ein haltendes System aktiviert. Der Insassen sitzt "In-Position", die Seitenwange liegt optimal am Insassen an. Detektiert nun ein Sensor (beispielsweise ein Inertialsensor oder ein vorausschauender Sensor) einen beginnenden oder unvermeidbaren Aufprall, so wird die zweite Stufe, ein vorbeschleunigendes System (von der Crashseite weggerichtet) aktiviert.

### Phase 3: In-Crash-Phase

Ein Crash, insbesondere ein Seitencrash, läuft ab. Die hierbei auftretenden Vorgänge sind vor allem Deformationen der Fahrzeugstruktur. Dabei entsteht eine Intrusion von Teilen des eigenen oder gegnerischen Fahrzeugs und der Insasse wird zur Crashseite beschleunigt. Der Crashpuls "fängt den vorbeschleunigten Insassen wieder ein".Dieser trifft mit reduzierter relativer Geschwindigkeit auf die ESA-Seitenwange (ESA = Enveloping Side Adjustment), diese nimmt Energie auf. Schließlich trifft der Insasse mit reduzierter Geschwindigkeit auf den Airbag und schließlich die Seitenstruktur oder die Tür.

Ein wichtiger Aspekt des vorliegend vorgestellten Ansatzes ist die Möglichkeit einer Einführung eines schaltbaren Reaktionsmusters, insbesondere in der dritten Phase, speziell falls eine Energieaufnahme nicht vorteilhaft ist (zum Beispiel, bei gleichzeitiger Wirkung des Airbags als Schutzelement des Personenschutzsystems). Dabei sollte beispielsweise eine schnelle Schaltung der ESA-Wange von dem Modus "Kraftbegrenzung", welcher beispielsweise in der dritten Phase einen Standard bildet, zu einem kraftfreien Modus erfolgen, in dem ein Kraftschluss zwischen dem betreffenden Schutzelement und dem Fahrzeuginsassen gelöst wird.

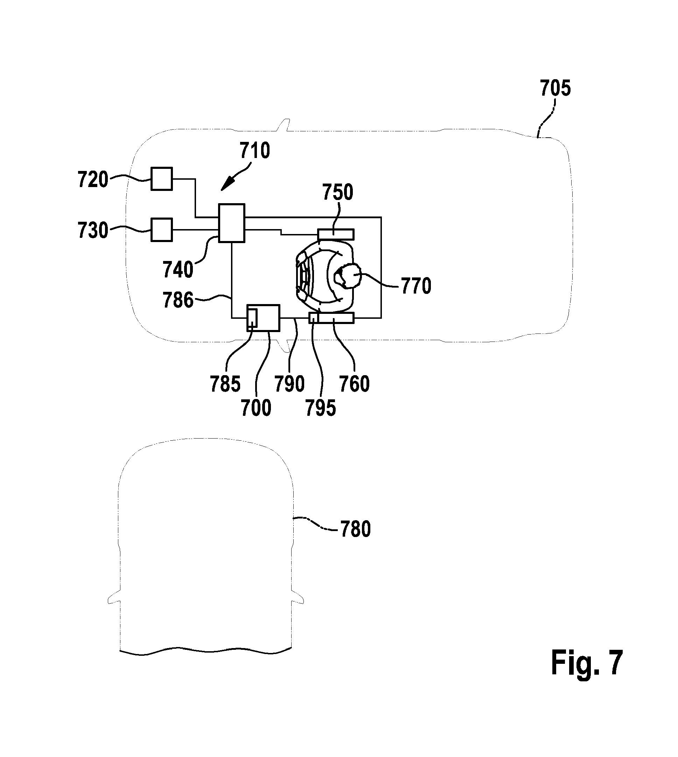

Fig. 7 zeigt ein Blockschaltbild eines Ausführungsbeispiels der vorliegenden Erfindung unter Verwendung eines Steuergeräts 700 in einem Fahrzeug 705. In dem Fahrzeug 705 ist ein Personenschutzsystem 710 angeordnet, welches beispielsweise unter Verwendung von Signalen aus einem oder mehreren Sensoren (wie einem Radarsensor 720 oder einem Beschleunigungssensor 730) in einer Auswertungseinheit 740 ein Steuersignal zur Aktivierung von Personenschutzelementen wie beispielsweise einem Seitenairbag 750 in einer Sitzlehne des Insassensitzes oder einer verstellbaren Sitzseitenwange 760 ermittelt. Wird nun beispielsweise erkannt, dass eine gemeinsame Wirkung der Schutzmittel wie dem Airbag 750 und der Sitzseitenwange 760 für einen Fahrzeuginsassen 770 eine erhöhte Gefährdung darstellen würde, als wenn lediglich eines der Schutzmittel, beispielsweise der Airbag 750, alleine aktiviert würde, kann ein nachfolgend näher beschriebener Schutzmechanismus aktiviert werden. In diesem Fall kann beispielsweise bei einem Aufprall eines Objektes 780, welches z. B. ein gegnerisches Fahrzeug sein kann, in der Auswertungseinheit 740 das Signal von den Sensoren 720 und/oder 730 ausgewertet werden und der Airbag 750 aktiviert werden. Zugleich kann die Sitzseitenwange 760 ebenfalls aktiviert werden, um den Fahrzeuginsassen 770, beispielsweise den Fahrer 770, in eine besonders günstige Wirkungsposition für den Airbag 750 zu bringen. Wird nun im Laufe des Aufpralls des Objekts 780 auf das Fahrzeug 705 erkannt, dass die gemeinsame Wirkung der beiden Schutzelemente 750 bzw. 760 so stark wäre und den Fahrzeuginsassen verletzen würde, indem es ihn beispielsweise auf den Beifahrersitz katapultiert, so kann zur Einleitung des vorstehen genannten Schutzmechanismus in dem Steuergerät 700 in einer Schnittstelle 785 ein Aufprallsignal 786 der Auswerteeinheit 740 eingelesen werden, welches signalisiert, dass das Schutzmittel in Form des Airbags 750 aktiviert wurde. Dabei kann zugleich eine Information über die Stärke bzw. Intensität oder Aufprallenergie des gegnerischen Fahrzeugs 780 und/oder die Position des Aufpralls des gegnerischen Fahrzeugs 780 auf das Fahrzeug 705 ebenfalls über die Schnittstelle 785 in das Steuergerät 700 eingelesen werden kann. Wird nun ferner erkannt, dass ein Wert bzw. allgemein eine Information über die Stärke, Intensität und/oder Aufprallenergie des gegnerischen Fahrzeugs 780 einen bestimmten Schwellwert überschreitet, kann von dem Steuergerät 700 ein entsprechendes Kraftschlusslösungssignal 790 an eine Löseeinheit 795 des Schutzelements 760 (hier in Form der Sitzseitenwange) ausgegeben, um ein weiteres Andrücken des Schutzelementes 760 an den Fahrzeuginsassen 770 zu unterdrücken. Mit anderen Worten wird somit ein Kraftschluss zwischen der verstellbaren Sitzseitenwange 760 und dem Fahrzeuginsassen 770 gelöst, wenn ein entsprechendes Kraftschlusslösungssignal 790 an das Schutzelement 760 bzw. die Löseeinheit 795 ausgegeben wird. Hierdurch kann erreicht werden, dass eine Verletzungsgefährdung des Fahrzeuginsassen 770 reduziert wird, da beispielsweise eine Verletzung der Beinpartien des Fahrzeuginsassen 770 verringert oder ganz vermieden werden kann.

Ein Vorteil des hier vorgestellten Ansatzes kann darin gesehen werden, dass in gewissen Fällen, eine die Haltecharakteristik der ESA nun auf "kraftfrei" geschaltet werden kann. Das Kraftfreischalten kann dann erfolgen, wenn eine Haltekraft von ESA keinen Vorteil bringt, beispielsweise weil der Airbag 750 allein bereits genug Haltekraft aufbringt. Das hier vorgestellte System so kann in Abhängigkeit des Seitencrash-Szenarios die Gesamt-Rückhaltekraft um die Rückhaltekraft von ESA absenken oder eine höhere Rückhaltekraft beibehalten, wenn nötig.

Eine hohe "Haltekraft" ist beispielsweise bei Szenarien mit hoher kinetischer Energie vorteilhaft (d. h. hohe Geschwindigkeiten, hohe Insassenmassen, tiefe Intrusion). Bei kleinerer kinetischer Energie kann die Variante mit der geringeren Haltekraft Vorteile zeigen.

Die vorstehend genannte Fallunterscheidung sollte unter Berücksichtigung der konkreten Fahrzeugeigenschaften und insbesondere des Rückhaltesystems festgelegt werden.

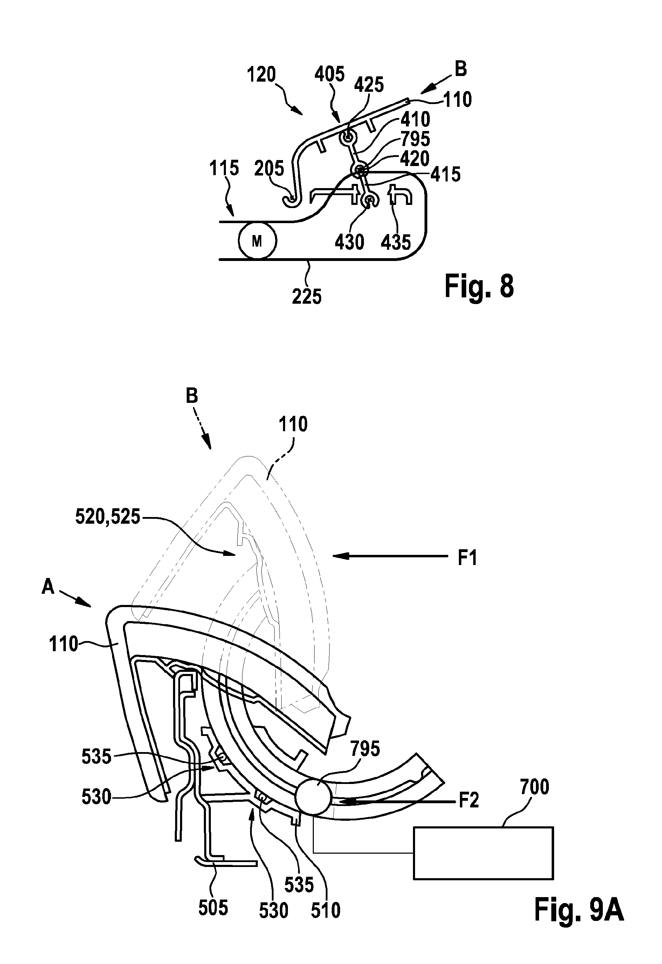

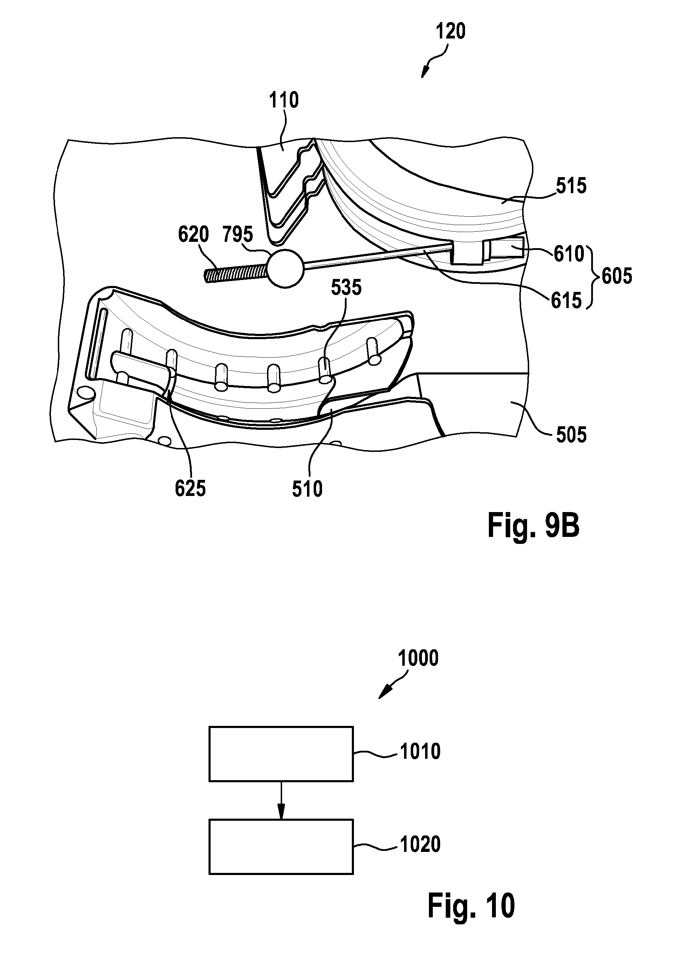

Die ESA-Wange 760 hat also eine geeignete Vorrichtung 795 zur Unterbrechung des Kraftschlusses als Löseeinheit 795, wie dies beispielsweise aus der Fig. 8 zu entnehmen ist. In der Fig. 8 ist dabei ein spezielles Ausführungsbeispiel des in Fig. 4B darstellten Schutzsystems abgebildet. Diese Vorrichtung 795 kann beispielsweise in der Form einer Sollbruchstelle im Bolzen 420 oder Kniehebel 410 zwischen dem Antriebsseil 225 und dem Kniehebel 410 vorliegen. In diesem Fall wird eine automatische Lösung des Kraftschlusses erfolgen, wenn ein gewisser Kraftpegel überschritten wird. Diese Vorrichtung 795 zur Unterbrechung kann jedoch auch elektrisch, elektromotorisch, über mechanische Elemente, über pneumatische Elemente oder pyrotechnisch implementiert sein. In der Fig. 9A bzw. 9B ist ein anderes Ausführungsbeispiel einer solchen Vorrichtung 795 zur Unterbrechung in ein System gemäß der Darstellung aus Fig. 5 dargestellt. Hier ist eine pyrotechnische Auslösevorrichtung als Löseeinheit 795 mit einer Zündpille vorgesehen, welche die Verbindung zwischen dem Antriebsseil und dem Verstellelement 110 unterbricht. Die Vorrichtung 795 kann auch in ESA-Systemen ohne Vorbeschleunigung von Fahrzeuginsassen von Nutzen sein. Die Vorrichtung 795 zur Unterbrechung des Kraftschlusses kann Bestandteil des Aktuators wie beispielsweise der Sitzseitenwange 760 bzw. 110 sind und dort auch nachgewiesen werden. Beispielsweise ist eine Identifikation der elektrischen Leitungen und der "Zündpille" bei pyrotechnischer Unterbrechung möglich.

Fig. 10 zeigt ein Ausführungsbeispiel der vorliegenden Erfindung als Verfahren 1000 zum Schutz eines Fahrzeuginsassen bei einem Aufprall eines Objektes auf ein Fahrzeug, wobei ein Schutzelement eines Personenschutzsystems verwendet wird, welches in einem vorbestimmten Zustand vor und/oder während des Aufpralls des Objektes auf das Fahrzeug eine Kraft auf den Fahrzeuginsassen ausübt. Das Verfahren 1000 umfasst einen Schritt des Einlesens 1010 eines Aufprallsignals, das eine Schwere oder Intensität des Aufpralls des Objekts auf das Fahrzeug repräsentiert. Ferner umfasst das Verfahren einen Schritt des Lösens 1020 eines Kraftschlusses zwischen dem Schutzelement und dem Fahrzeuginsassen, wenn zumindest ein Wert des Aufprallsignals in einer vorbestimmten Beziehung zu einem Schwellwert steht.

Die beschriebenen und in den Figuren gezeigten Ausführungsbeispiele sind nur beispielhaft gewählt. Unterschiedliche Ausführungsbeispiele können vollständig oder in Bezug auf einzelne Merkmale miteinander kombiniert werden. Auch kann ein Ausführungsbeispiel durch Merkmale eines weiteren Ausführungsbeispiels ergänzt werden.

Ferner können erfindungsgemäße Verfahrensschritte wiederholt sowie in einer anderen als in der beschriebenen Reihenfolge ausgeführt werden.

Umfasst ein Ausführungsbeispiel eine "und/oder"-Verknüpfung zwischen einem ersten Merkmal und einem zweiten Merkmal, so ist dies so zu lesen, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.
Genaue Beschreibung von Ausführungsformen

## Patentansprüche

1. Verfahren (1000) zum Schutz eines Fahrzeuginsassen (770) bei einem Aufprall eines Objektes (780) auf ein Fahrzeug (705), wobei ein Schutzelement (110, 760) eines Personenschutzsystems (710) verwendet wird, welches in einem vorbestimmten Zustand vor und/oder während des Aufpralls des Objektes (780) auf das Fahrzeug (705) eine Kraft auf den Fahrzeuginsassen (770) ausübt, wobei das Verfahren (1000) die folgenden Schritte aufweist:
- Einlesen (1010) eines Aufprallsignals (786), das eine Schwere oder Intensität des Aufpralls des Objekts (780) auf das Fahrzeug (705) repräsentiert; und
- Lösen (1020) eines Kraftschlusses zwischen dem Schutzelement (110, 760) und dem Fahrzeuginsassen (770), wenn zumindest ein Wert des Aufprallsignals (786) in einer vorbestimmten Beziehung zu einem Schwellwert steht.

2. Verfahren (1000) gemäß Anspruch 1, **dadurch gekennzeichnet, dass** im Schritt des Lösens (1020) ein Schwellwert verwendet wird, der von einer Größe, einem Gewicht und/oder eines Maßes des Körpers des Fahrzeuginsassen (770) abhängig ist.

3. Verfahren (1000) gemäß einem der vorangegangenen Ansprüche, **dadurch gekennzeichnet, dass** vor dem Schritt des Lösens (1020) ein Schritt des Wegbewegens des Fahrzeuginsassen (770) von einem ermittelten und/oder geschätzten Aufprallort des Objektes (780) auf das Fahrzeug (705) vorgesehen ist.

4. Verfahren (1000) gemäß einem der vorangegangenen Ansprüche, **dadurch gekennzeichnet, dass** im Schritt des Lösens (1020) ein Aktivieren eines elektrischen, elektromotorischen, mechanischen, pneumatischen und/oder pyrotechnischen Aktors (795) vorgesehen ist, um einen Kraftschluss zwischen dem Schutzelement (760, 110) und dem Fahrzeuginsassen (770) zu unterbrechen.

5. Verfahren (1000) gemäß einem der vorangegangenen Ansprüche, **dadurch gekennzeichnet, dass** der Schritt des Lösens (1020) in Abhängigkeit davon ausgeführt wird, dass vor, während oder nach dem Schritt des Lösens (1020) ein Schritt des Aktivierens eines weiteren Schutzelementes (750) des Personenschutzsystems (710) vorgesehen ist.

6. Verfahren (1000) gemäß einem der vorangegangenen Ansprüche, **dadurch gekennzeichnet, dass** im Schritt des Lösens (1020) ein Schwellwert verwendet wird, der von einem Aufprallort des Objektes (780) auf das Fahrzeug (705) und/oder einer kinetischen Energie des erfolgten und/oder erwarteten Aufpralls des Objektes (780) auf das Fahrzeug (1020) abhängig ist.

7. Verfahren (1000) gemäß einem der vorangegangenen Ansprüche, **dadurch gekennzeichnet, dass** im Schritt des Lösens (1020) ein Kraftschluss von einer Seitenwange (760) des Insassensitzes (110) als Schutzelement (760) auf den Körper, insbesondere den Thorax und/oder das Becken und/oder ein Bein des Fahrzeuginsassen (770) gelöst wird.

8. Vorrichtung (700) zum Schutz eines Fahrzeuginsassen (770) bei einem Aufprall eines Objektes (780) auf ein Fahrzeug (705), wobei ein Schutzelement (760, 110) eines Personenschutzsystems (710) verwendet wird, welches in einem vorbestimmten Zustand vor und/oder während des Aufpralls des Objektes (780) auf das Fahrzeug (705) eine Kraft auf den Fahrzeuginsassen (770) ausübt, wobei die Vorrichtung (700) die folgenden Merkmale aufweist:
- eine Schnittstelle (785) zum Einlesen eines Aufprallsignals (786), das eine Schwere oder Intensität des Aufpralls des Objekts (780) auf das Fahrzeug (705) repräsentiert; und
- eine Einheit (795) zum Lösen eines Kraftschlusses zwischen dem Schutzelement (110, 760) und dem Fahrzeuginsassen (770), wenn zumindest ein Wert des Aufprallsignals (786) in einer vorbestimmten Beziehung zu einem Schwellwert steht.

9. Computerprogramm mit Programmcode zur Durchführung des Verfahrens (1000) gemäß einem der vorangegangenen Ansprüche 1 bis 7, wenn das Computerprogramm auf einer Vorrichtung, einer Datenverarbeitungsanlage oder einem Steuergerät (700) durchgeführt wird.
